Europäisches Patentamt

European Patent Office

Office européen des brevets

(19)

(11) Veröffentlichungsnummer: **0 019 041**
**B1**

(12) **EUROPÄISCHE PATENTSCHRIFT**

(45) Veröffentlichungstag der Patentschrift:
27.06.84

(21) Anmeldenummer: 80101098.4

(22) Anmeldetag: 05.03.80

(51) Int. Cl.³: **B 64 C 27/33**

(54) Gelenkeloser Rotor.

(30) Priorität: 28.04.79 DE 2917301

(43) Veröffentlichungstag der Anmeldung:
26.11.80 Patentblatt 80/24

(45) Bekanntmachung des Hinweises auf die Patenterteilung:
27.06.84 Patentblatt 84/26

(84) Benannte Vertragsstaaten:
FR GB IT

(56) Entgegenhaltungen:
FR - A - 932 650
US - A - 3 052 305
US - A - 3 261 407
US - A - 3 330 362

(73) Patentinhaber: Messerschmitt-Bölkow-Blohm
Gesellschaft mit beschränkter Haftung,
Robert-Koch-Strasse, D-8012 Ottobrunn (DE)

(72) Erfinder: Buchs, Wolfgang, Dipl.-Ing.,
Graf-Arco-Strasse 4, D-8151 Valley (DE)
Erfinder: Nowak, Franz, Ing. grad., Edelweiszstrasse 68,
D-8021 Taufkirchen (DE)
Erfinder: Wörndle, Rudolf, Dipl.-Ing., Otterloder
Strasse 13, D-8011 Brunnthal (DE)

BUNDESDRUCKEREI BERLIN

## Beschreibung

Die Erfindung bezieht sich auf einen gelenklosen Rotor nach dem Oberbegriff des Patentanspruchs 1.

Derartige gelenklose Rotoren eigenen sich für den Einsatz bei Drehflügelflugzeugen für den Trag- bzw. Hubrotor oder den Heckrotor.

Es ist bereits ein Rotor bekannt (DE-A-1 531 375), bei welchem jeder Rotorarm aus einer Blattwinkellagerhülse besteht, in welcher eine Blattwurzelhülse drehbar angeordnet ist, so daß sie die Blattwinkelbewegungen ausführen kann, die über eine Steuerstange eingeleitet werden. An der Blattwurzelhülse ist ein Halsabschnitt des Rotorblatts befestigt, der in die Blattwurzel übergeht. Der Halsabschnitt bildet die einstückige Fortsetzung des Tragholms des Flügelabschnittes des Rotorblattes und ist so ausgebildet, daß er in Schwenk- und Schlagrichtung in etwa gleich biegeweich, jedoch torsionssteif ist. Bei diesem bekannten Rotor muß für die Blattwinkelverstellbewegung das von der Blattwinkellagerhülse und der Blattwurzelhülse gebildete Lager vorgesehen sein.

Bei einem derartigen Rotor (US-A-3 880 551) ist ein derartiges Blattwinkelverstellager nicht mehr erforderlich, so daß der Rotor insgesamt gelenk- und lagerlos ist. Um dies zu erreichen, ist ein blattfederartiges Verbindungselement vorgesehen, das an der Rotornabe eingespannt ist und in die Blattwurzel übergeht. Das Verbindungselement ist ein flacher Laminatkörper. Die gewünschte geringe Steifigkeit in Schlagrichtung wird einerseits durch die Blattfederwirkung des Laminatkörpers und andererseits durch eine teilweise elastische Einspannung des Verbindungselements an der Rotornabe erreicht. Durch diese Einspannung und die Flexibilität der Blattfeder kann auch die Blattwinkelverstellbewegung über den im Blattwurzelbereich angeordneten Steuerhebel erreicht werden. Bei dieser bekannten Anordnung ist jedoch die Steifigkeit des Verbindungselements in Schwenkrichtung und in Torsionsrichtung relativ groß und außerdem ist die elastische Einspannung des Verbindungselements problematisch und sehr aufwendig.

Bei einem bekannten, gelenklosen Rotor nach dem Oberbegriff des Anspruchs 1 (US-A-3 330 362) schließlich besteht das als fiktives Schlag-, Schwenk- und Blattwinkelverstellgelenk wirkende, metallische Verbindungselement aus kreuzförmig angeordneten Schubstegen, die über flanschartige Erweiterungen an den äußeren Schubstegenden mit den in Längsrichtung des Verbindungselements verlaufenden Gurtabschnitten verbunden sind. Um die Torsionssteifigkeit des Verbindungselements bei gleich großer Schlag- wie Schwenkbiegesteifigkeit zu reduzieren, sind die einzelnen Gurtabschnitte jeweils mit kammartig parallel zueinanderverlaufenden Längsschlitzen versehen. Mit einer solchen Querschnittskonfiguration des Verbindungselements ist nur eine begrenzte Verringerung des Torsionswiderstandes zu erzielen und für jeden Gurtabschnitt wird eine Vielzahl von torsionsmindernden Längsschlitzen benötigt, wodurch gleichzeitig auch die Biegesteifigkeit des Verbindungselements in Schlag- bzw. Schwenkrichtung in unerwünschter Weise herabgesetzt wird.

Die der Erfindung zugrunde liegende Aufgabe besteht darin, den gelenklosen Rotor nach dem Oberbegriff des Patentanspruchs 1 so auszubilden, daß eine starke Verringerung des Torsionswiderstandes ohne merkliche Beeinflussung des Biegeverhaltens des Verbindungselements erreicht und in einfacher Weise eine genaue gegenseitige und örtliche Abstimmung der einzelnen Schlag-, Schwenk- und Torsionssteifigkeiten möglich wird.

Diese Aufgabe wird erfindungsgemäß durch den im Anspruch 1 gekennzeichneten Rotor gelöst.

Aufgrund der beanspruchten Schlitzanordnung und Ausrichtung in den maßgebend am Gesamttorsionswiderstand des Verbindungselements beteiligten Schubstegen selbst wird erfindungsgemäß bereits durch einen oder nur wenige Schlitze eine starke Torsionsminderung des Verbindungselements gewährleistet, ohne daß sich die Schlag- und/oder Schwenkbiegesteifigkeit des Rotors merklich ändert, so daß die Torsionssteifigkeit auf einen genau festgelegten Wert reduziert und gleichzeitig durch entsprechende Ausgestaltung des Verbindungselements in der erfindungsgemäßen Weise eine gewünschte Schlag- und Schwenksteifigkeit in genau definierten Längenbereichen des Verbindungselements erreicht werden kann, mit der Besonderheit, daß die Gurtabschnitte aufgrund der unmittelbaren Anbindung an den Schubstegen und der günstigen Verteilung ihrer einzelnen Teilflächen bezüglich der Torsionsachse hauptsächlich zu den Biegesteifigkeiten des Querschnitts beitragen und in ihren radial außenliegenden Endbereichen ungeschlitzt bleiben können, wenn sie in der gemäß Anspruch 4 bevorzugten Weise seitlich an den schubfesten Stegen angeordnet werden.

Eine im Hinblick auf das geforderte Biege- und Torsionsverhalten des Verbindungselements unter Last werkstoffmäßig besonders günstige Gestaltung des erfindungsgemäßen Rotors ist im Anspruch 2 definiert. Mit der Ausführungsform nach Anspruch 3, bei welcher die Schlitze im wesentlichen in Richtung der Hauptträgheitsachsen des Verbindungselements angeordnet sind, wird eine besonders ausgeprägte Verringerung der Torsionssteifigkeit ohne merkliche Auswirkung auf das Biegeverhalten des Verbindungselements erreicht. Aus dem gleichen Grund sind gemäß Anspruch 5 vorzugsweise zusätzliche Schlitze in den Gurtabschnitten vorgesehen, deren geometrische Anordnung im Hinblick auf das gewünschte Biege- und Torsionsverhalten des Verbindungselements sich zweckmäßigerweise aus Anspruch 6 ergibt.

Mit der konstruktiven Ausgestaltung nach Anspruch 7 wird die Wirkung des Schlag- bzw. Schwenkgelenks an einer genau definierten Stelle erzielt, wobei diese Stelle relativ nahe an die Rotornabe gelegt werden kann.

Mit der Anordnung der Hauptträgheitsachsen des Verbindungselements nach Anspruch 8 läßt sich eine genaue Zuordnung der Schlag- und Schwenksteifigkeit zu den Elementabschnitten erzielen, während mit der Ausführungsform nach Anspruch 9 über eine Kopplung der Schwenkmit der Schlagbewegung eine aerodynamische Dämpfung erreicht wird. Durch die im Anspruch 10 definierte Vorverwindung wird das im Bereich der zyklischen und kollektiven Blattwinkelverstellbewegungen maximal auftretende Torsionsmoment des Verbindungselements minimal gehalten und dadurch das Blattwinkelverstellgestänge entlastet.

Anhand der Zeichnungen wird die Erfindung beispielsweise erläutert. Es zeigt

Fig. 1 eine Draufsicht auf eine Ausführungsform eines erfindungsgemäßen lagerlosen Rotors,

Fig. 2 eine Seitenansicht des lagerlosen Rotors von Fig. 1,

Fig. 3 in einem Diagramm den Verlauf der Steifigkeiten und Verwindung über einen Teil der Rotorlänge,

Fig. 4A, 4B und 4C erfindungsgemäß verwendbare Verbindungselemente mit einem T-förmigen Querschnitt,

Fig. 5A und 5B erfindungsgemäß verwendbare Verbindungselemente mit einem kreuzförmigen Querschnitt.

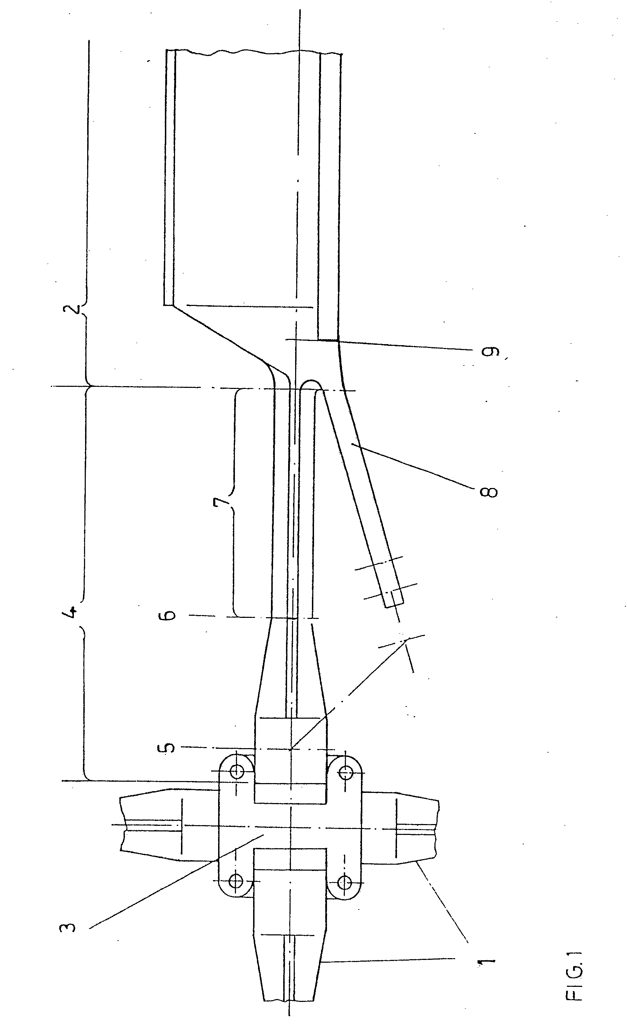

Der in Fig. 1 nicht vollständig gezeigte Rotor 1 hat Rotorblätter 2, die an einer Rotornabe 3 festgelegt sind. Zwischen der Blattwurzel 9, aus der ein Steuerhebel 8 vorsteht, und der Rotornabe 3 erstreckt sich als Teil des Rotorblatts 2 ein Verbindungselement 4, das aus einem Faserverbundwerkstoff hergestellt ist.

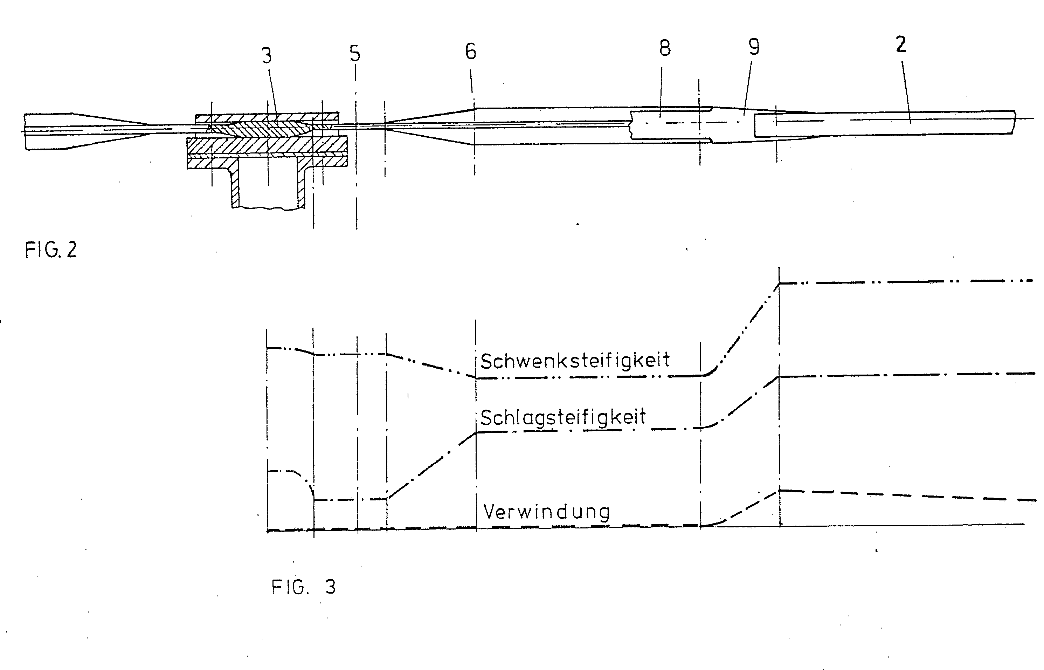

Wie aus Fig. 1 und 2 zu ersehen ist, ist das Verbindungselement im Übergangsbereich zur Rotornabe 3 relativ flach und breit ausgebildet, so daß es in diesem Bereich schwenksteif, jedoch schlagweich ist. In diesem Bereich befindet sich das äquivalente Schlaggelenk 5. Anschließend an diesen relativ flachen Abschnitt in der Nähe der Rotornabe 3 verjüngt sich das Verbindungselement 4 und geht ein äquivalentes Schwenkgelenk bildend in einen Abschnitt über, der als äquivalentes Drehgelenk 7 bezeichnet werden kann. Durch eine derartige Ausbildung des Verbindungselements 4 erhält man einen lagerlosen Rotor, dessen Schlag-, Schwenk- und Drehsteifigkeit über der Länge nach vorheriger Festlegung erreicht werden kann. Der Verlauf dieser Steifigkeiten ist im einzelnen in Fig. 3 für das gezeigte Ausführungsbeispiel dargestellt. Man sieht, daß ausgehend von der Rotornabe die Schlagsteifigkeit abnimmt und nach einem kurzen Längenabschnitt wieder ansteigt, so daß man einen Bereich geringer Schlagfestigkeit in der Nähe der Rotornabe 3 hat, der das äquivalente Schläggelenk bildet. Der Verlauf der Schwenksteifigkeit über der Länge ist ähnlich, es fehlt jedoch der erneute Anstieg wie bei der Schlagsteifigkeit. Statt dessen fällt die Schwenksteifigkeit weiter ab und nimmt schließlich einen konstanten Wert an. Der Verlauf der Drehsteifigkeit des Verbindungselementes 4 ist ähnlich, so daß die Verdrehung des Verbindungselements 4 in festgelegtem Abstand von der Rotornabe 3 beginnt und in dem sich bis zur Blattwurzel erstreckenden Profilabschnitt erfolgen kann, wobei die Länge dieses Abschnitts so bemessen ist, daß vorgegebene zulässige Spannungen nicht überschritten werden.

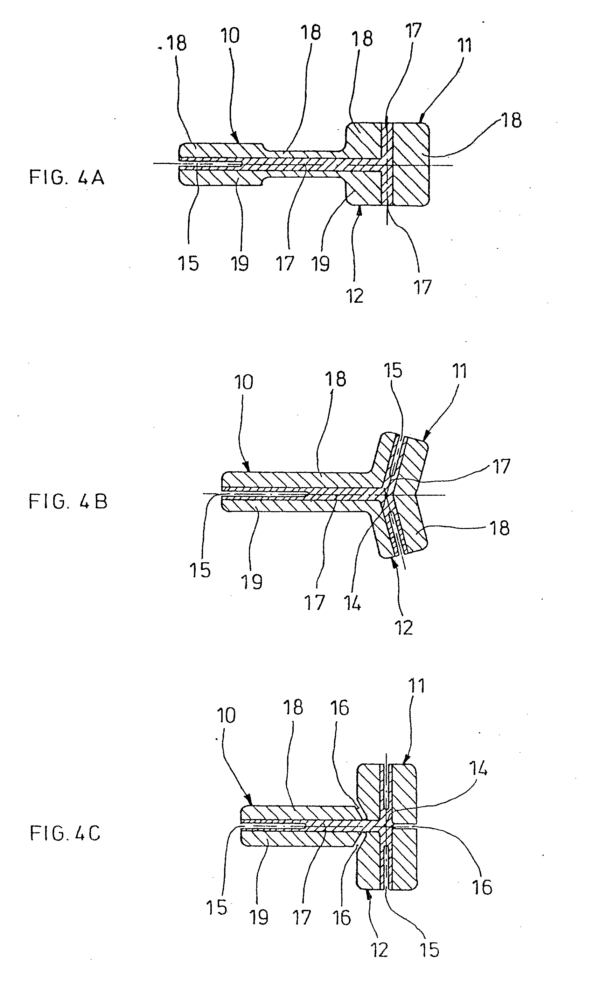

Bevorzugte Ausführungen von Querschnittsformen, mit denen der Steifigkeitsverlauf von Fig. 3 erhalten werden kann, sind in den Fig. 4A, 4B 4C sowie 5A und 5B gezeigt.

Die in den Fig. 4A, 4B und 4C gezeigten Querschnittsformen des Verbindungselements 4 sind T-förmig. Das T besteht aus drei Elementabschnitten 10, 11, 12, die in einem Winkel aneinanderstoßen und so ausgebildet sind, daß sie ein Stück bilden. Jeder Elementabschnitt 10, 11 und 12 hat einen Schubsteg 17 und auf beiden Seiten davon vorgesehene und mit ihm fest verbundene Gurte 18 und 19. Die Schubstege 17 bestehen aus $\pm\beta$-Faserbundlagen ($\beta$: z. B. 45°), die im Innenbereich des Verbindungselements 4 angeordnet sind. Diese $\pm\beta$-Lagen sind notwendig, da der Querschnitt sowohl durch Biegung als auch durch Querkraft beansprucht wird. Wegen der kleinen Hebelarme bezüglich des Schubmittelpunktes 15 tragen Schubflüsse in diesen schubsteifen Faserverbundlagen der Schubstege 17 wenig zur Torsionssteifigkeit des gesamten Querschnitts bei. Die im Außenbereich des Verbindungselements 4 angeordneten Gurte 18 und 19 tragen wegen ihrer hohen Längssteifigkeit und aufgrund ihres Abstands zur neutralen Faser hauptsächlich zur Biegesteifigkeit bei. Bei entsprechender Anordnung der T-förmigen Verbindungselemente 4 bezüglich der Rotorebene ist die Biegesteifigkeit in Schwenkrichtung relativ groß, in Schlagrichtung jedoch erheblich kleiner. Das in Fig. 4A im Querschnitt gezeigte Verbindungselement 4 hat im Schubsteg 17 des Elementabschnitts 10 einen von der Stirnseite zum Schubmittelpunkt 14 hin verlaufenden Schlitz 15. Derartige Schlitze sind bei dem in Fig. 4B gezeigten Verbindungselement 4 auch in den übrigen Elementabschnitten 11 und 12 vorgesehen. Schließlich können auch die den Gurten 18 und 19 im wesentlichen zum Schubmittelpunkt hin gerichtete Schlitze 16 vorgesehen sein. Mit Hilfe dieser Schlitze läßt sich die Torsionssteifigkeit in genau definierter Weise verringern, ohne daß die Biegesteifigkeit der Verbindungselemente 4 merklich beeinfluß wird.

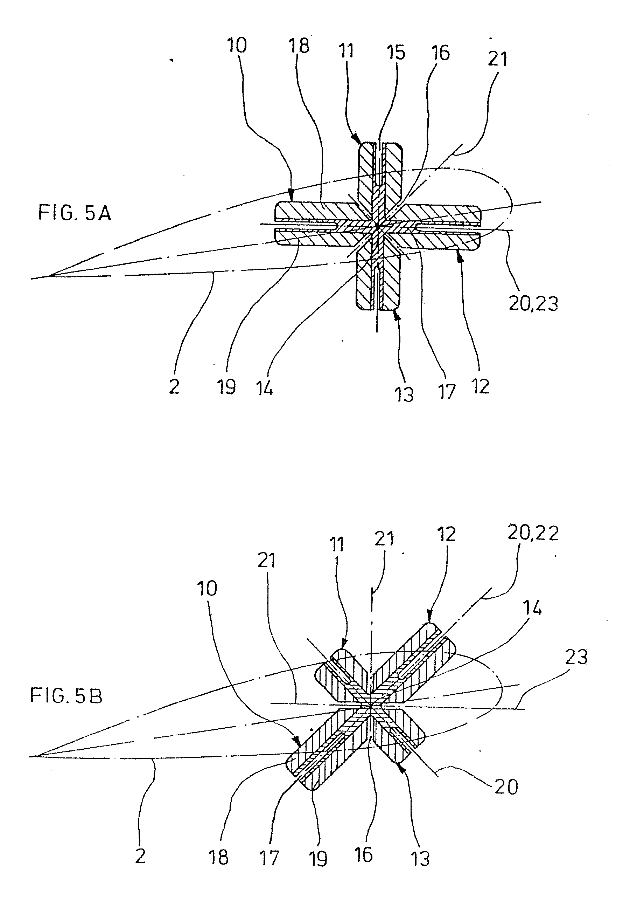

Besonders einfach lassen sich die gewünschten Steifigkeiten mit Hilfe von Verbindungselementen 4 mit kreuzförmigem Querschnitt erreichen, wie sie in den Fig. 5A und 5B gezeigt sind. Die Elementabschnitte 10, 11, 12 und 13 dieser Verbindungselemente 4 sind aufeinanderfolgend im rechten Winkel zueinander angeordnet und wie die Ausführungsformen der Fig. 4A bis 4C aus Faserverbundwerkstoff mit innenliegenden Schubstegen 17 und außenliegenden Gurten 18 und 19 hergestellt. Die Länge der Elementabschnitte kann gleich oder ungleich sein, zweckmäßigerweise haben jedoch die in der gleichen Ebene liegenden Elementabschnitte die gleiche Länge. Durch die Ausbildung der Schlitze 15 und 16 läßt sich das Biege- und Torsionsverhalten genau festlegen.

Bei dem Verbindungselement in Fig. 5A sind die Hauptträgheitsachsen 20 des Verbindungselements 4 in der Rotorebene 23 bzw. senkrecht dazu angeordnet. Es ist jedoch auch möglich, das Verbindungselement 4 bezüglich der Rotorebene 23 anders anzuordnen. Eine derartige bevorzugte Anordnung ist in Fig. 5B gezeigt. Bei dieser Anordnung liegt eine Hauptträgheitsachse 20 des Verbindungselements 4 in einer Ebene 22, die zur Rotorebene 23 geneigt ist. Bei der dargestellten Anordnung des Verbindungselements 4 bildet diese Ebene 22 mit der Rotorebene 23 einen Winkel von 45°.

**Patentansprüche**

1. Gelenkloser Rotor mit wenigstens zwei Rotorblättern (2), von denen jedes über ein als fiktives Schlag-, Schwenk- und Blattwinkelverstellgelenk wirkendes Verbindungselement (4) an die Rotornabe (3) angeschlossen ist, wobei jedes Verbindungselement mit mindestens einem, sich in dessen Längsrichtung erstreckenden Schlitz (15) versehen ist und aus wenigstens zwei, unter einem Winkel miteinander verbundenen Elementabschnitten (10, 11, 12, 13) besteht, von denen wenigstens einer — im Querschnitt gesehen — mit beiden Seiten über den anderen vorsteht, und jeder Elementabschnitt wenigstens einen schubfesten Steg (17) und einen mit diesem verbundenen Gurtabschnitt (18, 19) aufweist, dadurch gekennzeichnet, daß die Gurtabschnitte (18, 19) zumindest teilweise seitlich am Schubsteg (17) angeordnet sind jeder Schlitz (15) im Schubsteg von dem im Querschnitt gesehen äußeren Schubstegende ausgehend ausgebildet und im wesentlichen zum Schubmittelpunkt (14) des Verbindungselements (4) gerichtet ist.

2. Gelenkloser Rotor nach Anspruch 1, dadurch gekennzeichnet, daß das Verbindungselement (4) aus Faserverbundwerkstoff mit im Bereich der Gurtabschnitte (18, 19) in Längsrichtung des Verbindungselements verlaufenden, im Schubsteg (17) jedoch sich unter Winkeln kreuzenden, zur Längsrichtung des Verbindungselements geneigten Fasern besteht.

3. Gelenkloser Rotor nach Anspruch 1 oder 2, dadurch gekennzeichnet, daß die Schlitze (15) in den Schubstegen (17) im wesentlichen in Richtung der Hauptträgheitsachsen (20) des im Querschnitt T- oder kreuzförmigen Verbindungselements (4) angeordnet sind.

4. Gelenkloser Rotor nach einem der vorhergehenden Ansprüche, dadurch gekennzeichnet, daß die Schlitze (15) ausgehend vom freien Ende der die Gurtabschnitte (18, 19) in Radialrichtung durchsetzenden Schubstege (17) ausgebildet sind.

5. Gelenkloser Rotor nach einem der vorhergehenden Ansprüche, dadurch gekennzeichnet, daß in den Gurtabschnitten (18, 19) der Elementabschnitte (10, 11, 12, 13) wenigstens ein zusätzlicher, im wesentlichen zum Schubmittelpunkt (14) hin gerichteter, in Längsrichtung des Verbindungselements (4) verlaufender Schlitz (16) ausgebildet ist.

6. Gelenkloser Rotor nach Anspruch 5, dadurch gekennzeichnet, daß der oder die zusätzlichen Schlitze (16) in den Gurtabschnitten (18, 19) auf den Winkelhalbierenden (21) der Hauptträgheitsachsen (20) des Verbindungselements (4) angeordnet sind.

7. Gelenkloser Rotor nach einem der vorhergehenden Ansprüche, dadurch gekennzeichnet, daß das Verbindungselement (4) an wenigstens einer als fiktives Schlag- bzw. Schwenkgelenk (5, 6) wirkenden Stelle abgeflacht ist.

8. Gelenkloser Rotor nach einem der vorhergehenden Ansprüche, dadurch gekennzeichnet, daß die Hauptträgheitsachsen (20) des Verbindungselements (4) in der Rotorebene (23) und einer dazu senkrechten Ebene liegen.

9. Gelenkloser Rotor nach einem der Ansprüche 1 bis 7, dadurch gekennzeichnet, daß die Hauptträgheitsachsen (20) des Verbindungselements (4) zur Rotorebene (23) geneigt sind.

10. Gelenkloser Rotor nach einem der vorhergehenden Ansprüche, dadurch gekennzeichnet, daß das Rotorblatt (2) im Übergangsbereich zwischen Verbindungselement (4) und Blattwurzel (9) eine Vorverwindung aufweist.

**Claims**

1. A hingeless rotor having at least two rotor blades (2), each of which is connected to the rotor hub (3) by way of a connection element (4) acting as an imaginary flapping, swivelling and blade angle adjusting (pitch control) hinge, in which respect each connection element is provided with at least one slot (15) extending in the longitudinal direction thereof and consists of at least two elements (10, 11, 12, 13) which are connected together at an angle and at least one of which — considered in cross-section — juts out with both sides extending over the other(s), each element having at least one shear-strong web (17) and a flange (18, 19) connected thereto, characterized in that the flanges (18, 19) are arranged at least partially laterally on the shear web (17) and each slot (15) in the shear web is formed so as to emanate when considered in cross-section, from the outer end of the shear web and be substantially directed towards the central shear point (14) of the connection element (4).

2. A hingeless rotor according to claim 1, characterized in that the connection element (4) consists of fibre composite material having fibres which extend in the longitudinal direction of the connection element in the region of the flanges (18, 19) but which intersect one another at angles in the shear web (17) when they are inclined towards the longitudinal direction of the connection element.

3. A hingeless rotor according to claim 1 or 2, characterized in that the slots (15) in the shear webs (17) are arranged substantially in the direction of the main axes of inertia (20) of the connection element (4) which is T-shaped or cross-shaped in cross-section.

4. A hingeless rotor according to one of the preceding claims, characterized in that the slots (15) are formed so as to emanate from the free ends of the shear webs (17) which penetrate the flanges (18, 19) in the radial direction.

5. A hingeless rotor according to one of the preceding claims, characterized in that at least one additional slot (16) is formed in the flanges (18, 19) of the elements (10, 11, 12, 13) which slot is directed substantially towards the central shear point (14) and extends in the longitudinal direction of the connection element (4).

6. A hingeless rotor according to claim 5, characterized in that the additional slot or slots (16) in the flanges (18, 19) is or are arranged on the angle bisectors (21) of the main axes of inertia (20) of the connection element (4).

7. A hingeless rotor according to one of the preceding claims, characterized in that the connection element (4) is flattened at at least one location acting as an imaginary flapping or respectively swivelling hinge (5, 6).

8. A hingeless rotor according to one of the preceding claims, characterized in that the main axes of inertia (20) of the connection element (4) lie in the rotor plane (23) and a plane perpendicular thereto.

9. A hingeless rotor according to one of claims 1 to 7, characterized in that the main axes of inertia (20) of the connection element (4) are inclined to the rotor plane (23).

10. A hingeless rotor according to one of the preceding claims, characterized in that the rotor blade (2) is pre-warped in a transitional region between the connection element (4) and a blade root (9).

**Revendications**

1. Rotor non-articulé comportant au moins deux pales (2), dont chacune est reliée au moyeu (3) du rotor par un élément de raccordement (4) agissant en tant qu'articulation fictive de battement, de traînée et de variation du pas des pales, chaque élément de raccordement étant muni d'au moins une fente (15), s'étendant dans le sens de sa longueur, et comprenant au moins deux sections (10, 11, 12, 13) mutuellement reliées angulairement, dont au moins une — vue en coupe transversale — déborde des autres par deux côtés, et chaque section comportant au moins une âme (17) résistante au cisaillement et des semelles (18, 19) raccordées à cette dernière, caractérisé par le fait que les semelles (18, 19) sont tout au moins en partie disposées latéralement sur l'âme et que chaque fente (15) dans l'âme, vue en coupe transversale, est réalisée en partant de l'extrémité extérieure de l'âme et est sensiblement dirigée vers le centre de cisaillement (14) de l'élément de raccordement (4).

2. Rotor non-articulé selon la revendication 1, caractérisé par le fait que l'élément de raccordement (4) est réalisé en matériau composite fibreux avec, dans la zone des semelles (18, 19), des fibres disposées dans le sens de la longueur de l'élément de raccordement, mais se croisant angulairement dans l'âme (17) et inclinées par rapport au sens de la longueur de l'élément de raccordement.

3. Rotor non-articulé selon la revendication 1 ou 2, caractérisé par le fait que les fentes (15) dans les âmes (17) sont orientées sensiblement en direction des axes principaux d'inertie (20) de l'élément de raccordement (4) de section transversale en forme de T ou de croix.

4. Rotor non-articulé selon l'une des revendications précédentes, caractérisé par le fait que les fentes (15) sont réalisées en partant de l'extrémité libre des âmes (17) traversant les semelles (18, 19) dans le sens radial.

5. Rotor non-articulé selon l'une des revendications précédentes, caractérisé par le fait que dans les semelles (18, 19) des sections (10, 11, 12, 13) est réalisée au moins une fente supplémentaire (16) orientée sensiblement en direction du centre de cisaillement (14) et disposée dans le sens de la longueur de l'élément de raccordement (4).

6. Rotor non-articulé selon la revendication 5, caractérisé par le fait que le ou les fentes supplémentaires (16) dans les semelles (18, 19) sont disposées sur les bissectrices (21) des axes principaux d'inertie (20) de l'élément de raccordement (4).

7. Rotor non-articulé selon l'une des revendications précédentes, caractérisé par le fait que l'élément de raccordement (4) est aplati en au moins un endroit agissant en tant qu'articulation fictive de battement ou de traînée (5, 6).

8. Rotor non-articulé selon l'une des revendications précédentes, caractérisé par le fait que les axes principaux d'inertie (20) de l'élément de raccordement (4) sont situés dans le plan (23) du rotor et un plan perpendiculaire à ce dernier.

9. Rotor non-articulé selon l'une des revendications 1 à 7, caractérisé par le fait que les axes principaux d'inertie (20) de l'élément de raccordement (4) sont inclinés par rapport au plan (23) du rotor.

10. Rotor non-articulé selon l'une des revendications précédentes, caractérisé par le fait que la pale (2) dans la zone de transition entre l'élément de raccordement (4) et le pied de pale (9) présente une prétorsion.

FIG.1

FIG. 2

FIG. 3

FIG. 4 A

FIG. 4 B

FIG. 4 C

FIG. 5A

FIG. 5B